# EUROPÄISCHE PATENTSCHRIFT

(11) **EP 2 678 111 B1**
(45) Veröffentlichungstag und Bekanntmachung des Hinweises auf die Patenterteilung: **26.09.2018**
(21) Anmeldenummer: 11705557.4
(22) Anmeldetag: 24.02.2011
(51) Int. Cl.: B04C 5/28

(54) **HYDROZYKLONANORDNUNG**
HYDROCYCLONE ARRANGEMENT
ENSEMBLE HYDROCYCLONE

(43) Veröffentlichungstag der Anmeldung: 01.01.2014
(73) Patentinhaber: GEA Mechanical Equipment GmbH, 59302 Oelde (DE)
(72) Erfinder: OOSTING, Peter, NL-9649 CE Muntendam (NL)
(74) Vertreter: Specht, Peter
(86) Internationale Anmeldenummer: PCT/EP2011/052731
(87) Internationale Veröffentlichungsnummer: WO 2012/113453

(56) Entgegenhaltungen:
- EP-A2- 0 070 816
- EP-A2- 0 563 523
- CA-A- 886 936
- DE-B3- 10 322 572
- US-A- 5 401 411

## Beschreibung

Die Erfindung betrifft eine Hydrozyklonanordnung nach dem Oberbegriff des Anspruchs 1.

Hydrozyklone sind aus dem Stand der Technik in verschiedensten Ausführungsformen bekannt. Sie dienen insbesondere zur Isolierung von Stärke durch ein Zentrifugieren einer Suspension aus Stärke und anderen Kartoffelkomponenten in Wasser. Die Suspension wird tangential in einen konischen Innenraum eines Behältnisses geleitet, in welchem sie rotiert, wobei sich durch die dabei auftretende Zentrifugalwirkung die zugeleitete Suspension in eine leichtere und eine schwerere Phase trennt, die getrennt abgeleitet werden. Vorrichtungen der gattungsgemäßen und erfinderischen Art können aber auch für andre Aufgaben, so für andere Stärkeverarbeitungen oder zur Klassierung von Mineralien genutzt werden.

Eine Hydrozyklonanordnung, die insbesondere für Verarbeitung von Stärke geeignet ist, offenbart die EP 0070816 B1. Nach dieser gattungsgemäßen Schrift wird jeweils eine Mehrzahl von Einzelzyklonen aus Einzelröhrchen, die in einen Block eingesetzt werden, zu einer Art Modul zusammengestellt, die durch eine vielteilige Halterung mit einer Hydraulikanordnung mit relativ massiven Abdeckplatten zu einer übergeordneten Hydrozyklonanordnung zusammengefasst werden, um die hohen Drücke aufzunehmen, unter welchen die zu verarbeitende Suspension zum Erzielen einer genügend großen Zentrifugalwirkung zugeleitet werden muss. Einen weiteren gattungsgemäßen Stand der Technik - der auch dem Oberbegriff des Anspruchs 1 entspricht - dieser Art zeigt die CA 886936 A1.

Die gattungsgemäße Hydrozyklonanordnung weist damit einen relativ aufwendigen und komplizierten Aufbau auf, der sich in hohe Herstellkosten niederschlägt. Die gattungsgemäße Hydrozyklonanordnung ist zudem auch nur relativ kompliziert zu reinigen, denn sie besteht aus vielen Teilen, an welchen sich Verunreinigungen anlagern können. Zudem ist die Montage und Demontage der Hydrozyklonanordnung relativ schwierig und zeitaufwendig.

Die Erfindung hat die Aufgabe, diese Probleme zu mindern bzw. zu lösen.

Die Erfindung löst diese Aufgabe durch den Gegenstand des Anspruchs 1. Eine Anlage aus Hydrozyklonmodulen erfindungsgemäßer Art kann besonders schnell und gründlich gereinigt werden. Insbesondere werden die Einzelröhrchen, die nach dem Stand der Technik vorgesehen, insbesondere in einen Block gesetzt werden, eingespart, da die Trennräume der Einzel-Hydrozyklone direkt in einem oder mehreren Basisblöcken ausgebildet sind. Der Begriff des Basisblockes umfasst dabei einerseits massive Blöcke, in welchen die Trennräume sowie ggf. Zu- und Abläufe ausgebildet wurden, beispielsweise durch Bohren, Fräsen oder Erodieren, aber auch Basisblöcke bzw. Basiseinheiten, in den mehrere Trennräume mittels eines Gießvorganges ausgebildet worden sind. Damit wird die Teilevielfalt verringert. Die daraus resultierende verbesserte Reinigungswirkung verringert die Gefahr einer Kontamination. Die einzelnen Hydrozyklonmodule sind zudem leicht austauschbar. Derart sind besonders - aber nicht nur - Stärkesuspensionen gut verarbeitbar. Besonders vorteilhaft ist es, wenn eine Vielzahl, d.h. vier oder mehr, beispielsweise zehn, der Trennräume direkt in jeweils einem der Basisblöcke ausgebildet sind, da derart die Teilevielfalt besonders deutlich verringert und die Reinigungswirkung optimiert wird.

Vorteilhafte Ausgestaltungen der Erfindung sind den Unteransprüchen zu entnehmen.

Nachfolgend wird die Erfindung anhand von Ausführungsbeispielen unter Bezug auf die Zeichnung näher beschrieben. Es zeigt:
- Fig. 1: eine perspektivische Ansicht einer Anlage aus mehreren Hydrozyklonanordnungen;
- Fig. 2: eine perspektivische Ansicht eines im Vergleich zu Fig. 1 vergrößert dargestellten Abschnittes einer Hydrozyklonanordnung;

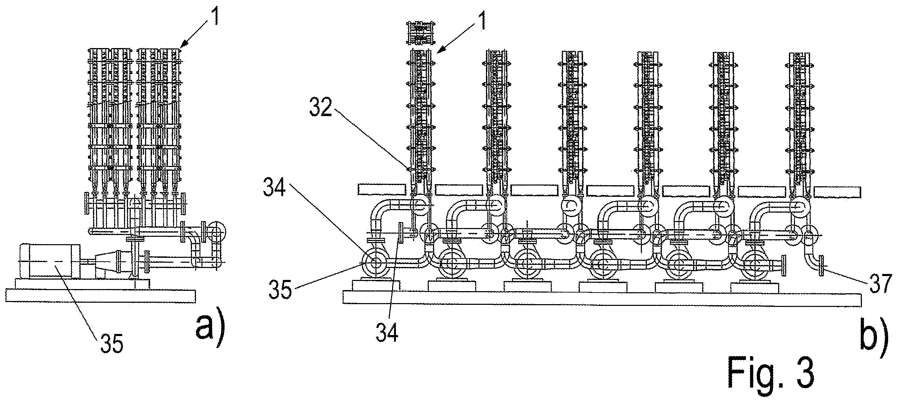

- Fig. 3a: eine Seitenansicht einer Anlage aus mehreren Hydrozyklonanordnungen;
- Fig. 3b: eine Frontansicht der Anlage aus Fig. 3 und eine Draufsicht auf ein Hydrozyklonmodul ;

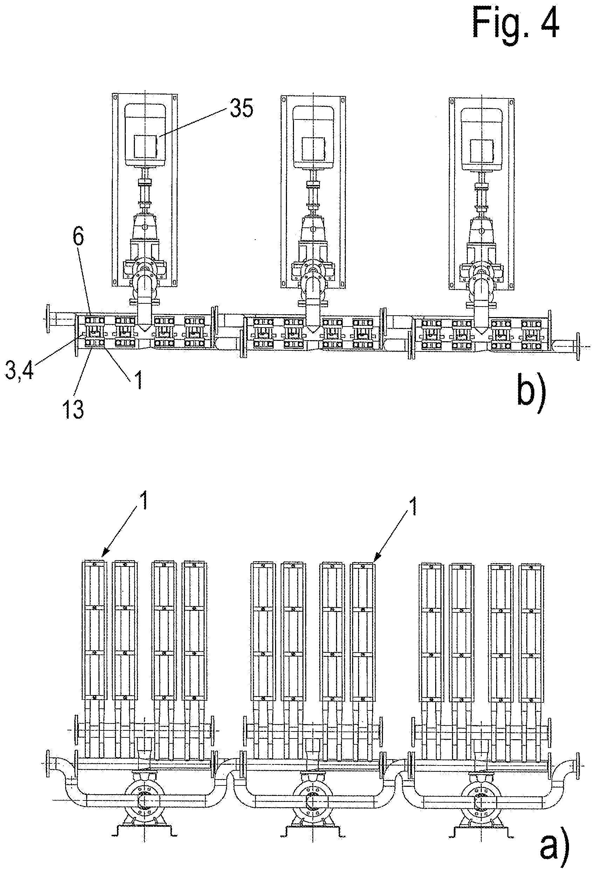

- Fig. 4a,b: eine Seitenansicht einer Anlage aus mehreren Hydrozyklonanordnungen und eine Draufsicht auf diese Anlage;
- Fig. 5a - d: verschiedene Ansichten und Schnittansichten durch einen Hydrozyklon-Basisblock eines Hydrozyklons;
- Fig. 5e: eine Schnittansicht eines Überlaufkopfes eines Hydrozyklons;
- Fig. 6: eine Schnittansicht durch ein Hydrozyklonmodul;
- Fig. 7: eine Seitenansicht einer weiteren Ausführung eines Basisblocks eines Hydrozyklonmoduls;
- Fig. 8: eine perspektivische Ansicht eines Teilbereiches der Anordnung aus Fig. 7.

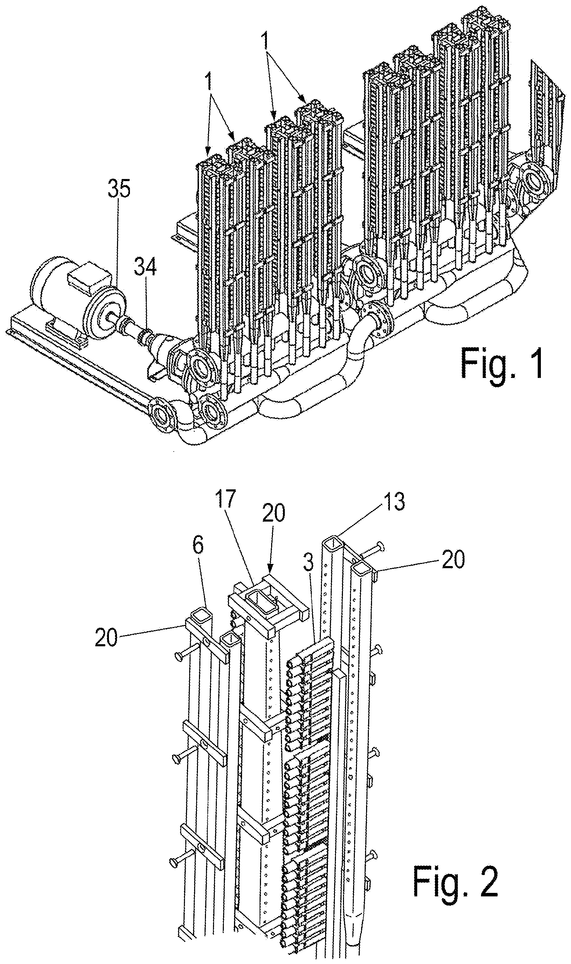

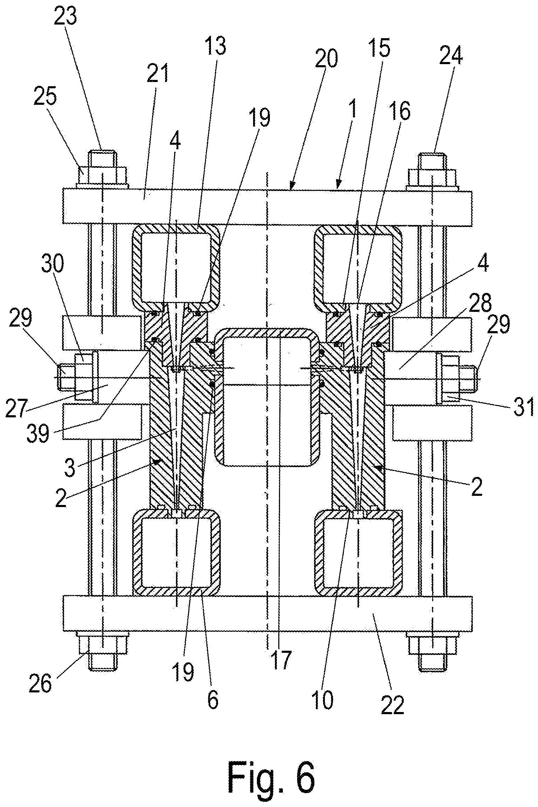

Fig. 1 zeigt eine Ansicht einer Anlage aus mehreren Hydrozyklonanordnungen erfindungsgemäßer Art, wobei jede der Hydrozyklonanordnungen wenigstens eines oder mehrere, vorzugsweise eine Vielzahl von Hydrozyklonmodulen 1 aufweist, von denen eines in Fig. 6 dargestellt ist.

Jedes Hydrozyklonmodul 1 bildet danach wiederum eine vormontierbare bzw. vormontierte Einheit aus wenigstens zwei oder mehr Hydrozyklonen 2.

Die Hydrozyklone 2 weisen jeweils einen Basisblock 3 auf und einen auf den Hydrozyklon-Basisblock 3 aufgesetzten Kopf 4.

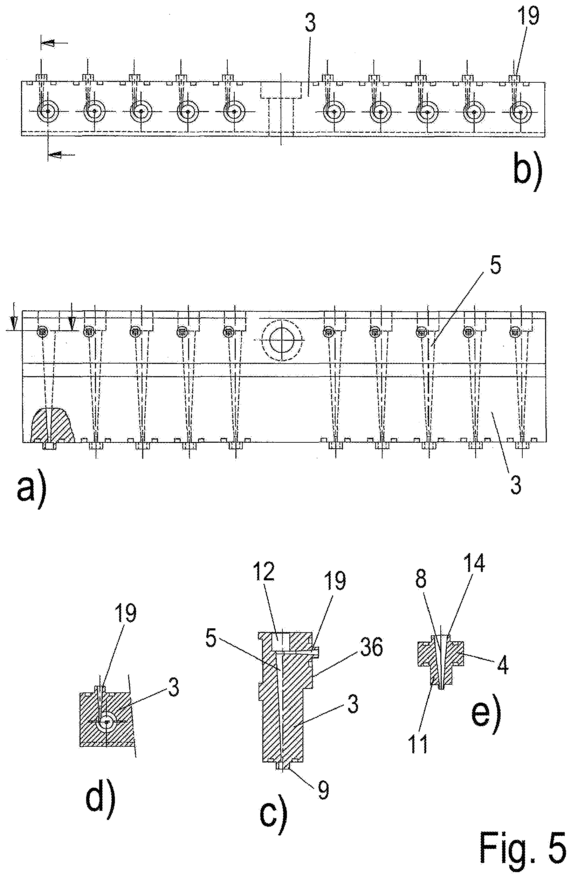

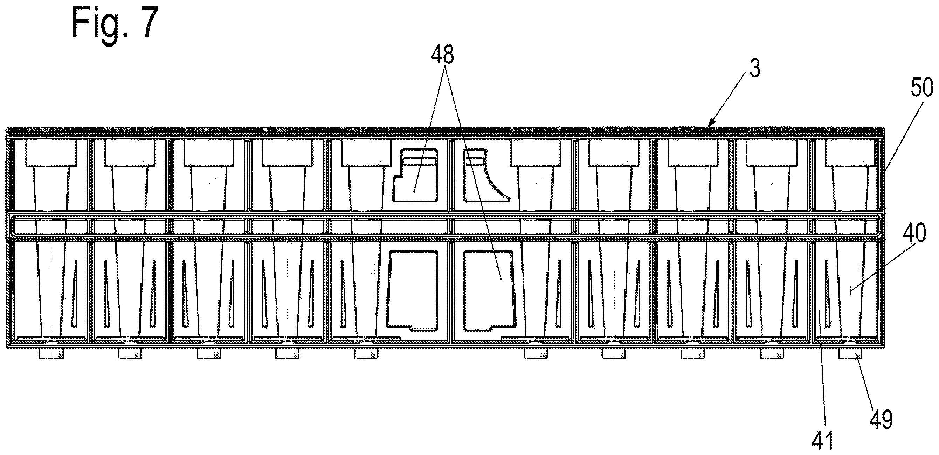

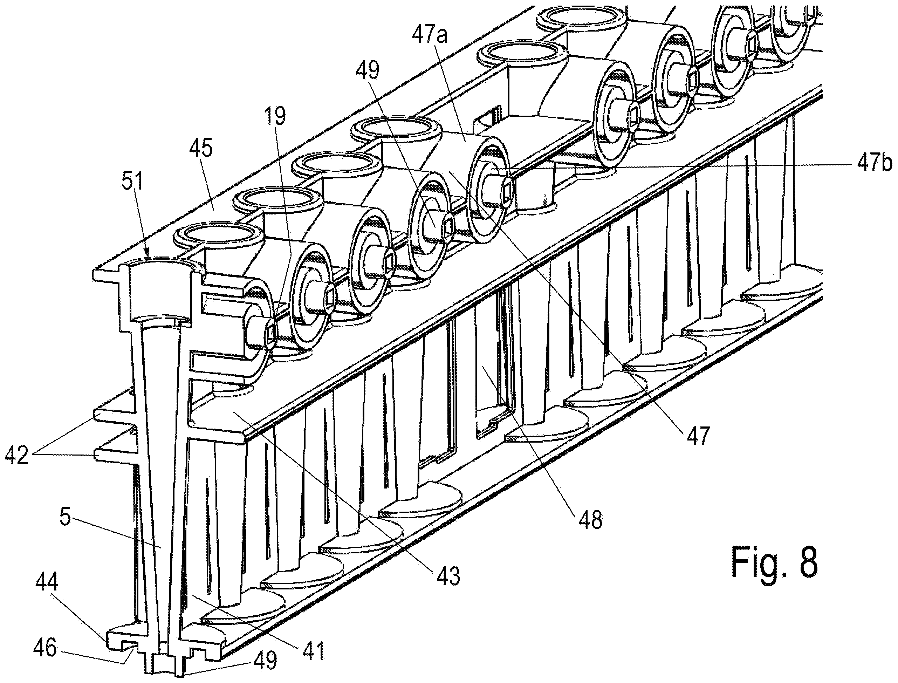

Der Basisblock 3 - siehe Fig. 5 - ist vorzugsweise als Metallblock oder als Block aus anderem Material wie Keramik oder Kunststoff ausgebildet, in welchem wiederum die Kontur wenigstens eines (direkt, d.h. ohne ein zusätzlich in den Block eingesetztes Röhrchen) Hydrozyklon-Trennraumes 5 oder mehrerer Hydrozyklon-Trennräume 5 ausgebildet ist, beispielsweise dadurch, dass in dem Basisblock als Ausgangswerkstück ein Trennraum 5 ausgearbeitet wird, was z.B. mittels Lasern oder Erodierverfahren oder dgl. erfolgen kann, wenn der Block aus Metall besteht. Alternativ kann der Basisblock auch gegossen werden, wobei beim Gießvorgang direkt die Trennräume mit im Basisblock gegossen werden (siehe Fig. 7 und 8). Der "Block" muss dabei nicht quaderförmig sein sondern kann auch eine materialsparendere Formgebung aufweisen (siehe wiederum Fig. 7 und 8).

Jeder der Trennräume 5 ist konisch ausgebildet und weist an seinem Ende größeren Durchmessers einen tangentialen Zulauf 19 (Fig. 5a) auf. Der Trennraum 5 ist an seinen gegenüberliegenden Enden offen ausgebildet, d.h., er durchsetzt vollständig den Basisblock 2 (Fig. 5, 6).

Der Basisblock 3 liegt mit seinem einen Ende an einem Unterlaufrohr 6 an, welches hier einen rechteckigen Querschnitt aufweist.

Das Unterlaufrohr 6 weist eine Bohrung 7 auf, welche mit dem Ende geringeren Durchmessers des Trennraums 5 fluchtet. Der Basisblock 3 und das Unterlaufrohr 6 greifen formschlüssig ineinander, was dadurch realisiert wird, dass ein Ansatz 9 in einem Bohrungsabschnitt 10 größeren Durchmessers in der Rohrwandung des Unterlaufrohres 6 eingreift, wobei der Bohrungsabschnitt 10 an einem Bund in die Durchgangsbohrung 7 übergeht.

Der Kopf 4 ist ebenfalls von einer Bohrung 8 durchsetzt, die eine konische Form hat.

Der Kopf 4 und der Basisblock 3 greifen ebenfalls formschlüssig ineinander, was hier dadurch realisiert wird, dass ein Ansatz 11 in einen Bohrungsabschnitt 12 im Basisblock 3 eingreift, der mit dem Trennraum 5 fluchtet bzw. diesen an der Seite mit dem größeren Durchmesser begrenzt.

Im montierten Zustand fluchtet die Bohrung 8 mit dem Trennraum. Derart wird ein Ablauf bzw. es wird eines Absaugeinrichtung an dieser Seite des Trennraumes 5 realisiert, da die Bohrung 8 einen kleineren Durchmesser aufweist als der Trennraum 5 an seinem Ende größeren Durchmessers.

Der Kopf 4 liegt ferner an seiner vom Basisblock 3 abgewandten Seite an einem Oberlaufrohr 13 an. Der Kopf 4 und das Oberlaufrohr 13 greifen formschlüssig ineinander, was hier dadurch realisiert wird, dass ein Ansatz 14 in einen Bohrungsabschnitt 15 einer Bohrung 16 des Oberlaufrohrs 13 eingreift. Das Oberlaufrohr 13 hat vorzugsweise einen rechteckigen Querschnitt.

Der Basisblock 3 weist einen seitlichen Ansatz 36 auf, mit welchem er an einem Zulaufrohr 17 mit hier rechteckiger Formgebung anliegt. Der Ansatz 36 und das Zulaufrohr 17 greifen ebenfalls formschlüssig ineinander. Das Zulaufrohr 17 weist ferner eine Bohrung 18 in seiner Seitenwand auf, welche in den tangentialen Zulauf 19 in den Trennraum 5 mündet.

Die Anordnung ist spiegelsymmetrisch, d.h. das Zulaufrohr 17 weist an seinen beiden gegenüberliegenden Seiten jeweils in spiegelsymmetrischer Anordnung einen der Hydrozyklone mit dem Basisblock 3 und dem Kopf 4 auf, wobei diese Elemente an dem Unterlaufrohr 6 und dem Oberlaufrohr 13 anliegen.

Zwischen den aneinander liegenden Elementen Basisblock 3, Kopf 4, Unterlaufrohr 6, Oberlaufrohr 13 und/oder dem Zulaufrohr 17 können jeweils Dichtungen 39 - Dichtringe - im Bereich der aneinander liegenden Flächen angeordnet oder ausgebildet sein, um die Dichtigkeit zu optimieren.

In axialer Richtung des Zulaufrohres 17 bzw. der beiden Unterlaufrohre 6 und der beiden Oberlaufrohre 13 sind mehrere - im dargestellten Beispiel zehn - der Doppel-Hydrozyklonanordnungen angeordnet. Es können dabei mehrere der Trennräume in einen einzigen Basisblock 3 und einen einzigen Kopf 4 eingearbeitet werden oder es werden jeweils Einzel-Basisblöcke und Einzel-Basisköpfe gefertigt.

Die Einzelteile der Mehrzahl aus Doppel-Hydrozyklonen werden jeweils mittels einer Spanneinrichtung bzw. Klammereinrichtung 20 mit einer entsprechend großen Anpresskraft zusammen gespannt.

Die Klammereinrichtung 20 weist dazu hier beispielhaft einen ersten Träger 21 auf und einen zweiten Träger 22, die jeweils an den von den Hydrozyklonen abgewandten Außenwandungen der beiden Oberlaufrohre 13 und der beiden Unterlaufrohre 6 anliegen.

Die beiden Träger 21, 22 erstrecken sich seitlich über die Doppel-Hydrozyklone hinaus. Sie sind im Bereich von Bohrungen von Schraubbolzen 23, 24 durchsetzt, auf welche Muttern 25, 26 aufgeschraubt sind.

Mittels der Muttern 25, 26 können die Träger 21, 22 aufeinander zu bewegt werden, so dass die Elemente Oberlaufrohr 6, Kopf 4, Basisblock 3 und Unterlaufrohr 13 zusammengepresst werden (X Richtung).

Eine derartige Spanneinrichtung ist konstruktiv einfach aufgebaut und dennoch besonders funktionssicher. Sie erlaubt zudem eine schnelle Montage und Demontage.
In der hierzu senkrechten Richtung werden mit zwei weiteren Trägern 27, 28 und wenigstens einem weiteren Schraubbolzen 29 und zwei Muttern 30, 31 die beiden Basisblöcke 3 gegen das mittige Zulaufrohr 17 gepresst.

Derart wird eine weitere Spanneinrichtung gebildet. Es ist auch denkbar, weitere Spanneinrichtungen an den Hydrozyklonmodulen vorzusehen.

Mit den zwei Spanneinrichtungen werden die Elemente der Doppel-Hydrozyklone in zwei zueinander senkrechten Richtungen X und X zusammengepresst, um eine genügende Druckdichtigkeit der Anordnung zu realisieren.

Die Basisblöcke 3 können Ansätze, Ausnehmungen, Stege oder dgl. aufweisen, an welchen sich die Träger abstützen.

Eine Vielzahl der Doppel-Hydrozyklonmodule wird - beispielsweise an übergeordneten Trägern 32 - zusammengefasst, um die Hydrozyklonanordnung auszubilden (Fig. 1).

Dabei münden die Unterlaufrohre 6 und die Oberlaufrohre 14 jeweils in übergeordneten Ablaufleitungen 33, 37 zur Ableitung der voneinander getrennten Phase und die Zulaufrohre münden in ein übergeordnetes Zulaufrohr 34, in welches eine Pumpe 35 geschaltet ist, um das Schleudergut mit einem genügend hohen Druck in den Hydrozyklon leiten zu können.

Im Betrieb wird das zu verarbeitende fließfähige Produkt mit der Pumpe 35 durch die sich verzweigende Zuleitung 34 in das wenigstens eine bzw. die Zulaufrohr(e) 17 geleitet, aus dem/denen es jeweils durch die Bohrungen 18 in den tangentialen Zulauf 19 und in die Trennräume 5 der Einzel-Hydrozyklone eintritt, in die Flüssigkeit umläuft und sich aufgrund der Zentrifugalwirkung in zwei Phasen aufteilt, die durch die Oberleitung und die Unterleitung abgeleitet werden.

Der besondere Vorteil dieser Anordnung ist darin zu sehen, dass die einzelnen Hydrozyklonmodule 1 und insbesondere auch die einzelnen Hydrozyklone nur aus sehr wenigen Teilen bestehen, nämlich dem Basisblock 3, dem Kopf 4 und ggf. Dichtungen. Den Hydrozyklonmodulen 1 sind dann wiederum das Zulaufrohr 17 sowie die beiden Unterlaufrohre 6 und die beiden Oberlaufrohre 13 zugeordnet.

Da die Anordnung nur aus wenigen Teilen besteht, kann sie besonders gut und gründlich gereinigt werden, denn durch die wenigen Teile - insbesondere durch einen Verzicht auf Röhrchen und dgl. - werden schwer zu reinigende Winkel und dgl. weitestgehend vermieden.

Fig. 7 und 8 zeigen eine weitere Variante eines Basisblocks eines Hydrozyklonmoduls.

Dieser Basisblock ist nicht als massiver Block ausgebildet, in welchem die Trennräume der Hydrozyklone ausgebildet sind, sondern als Gussteil 50. Dieses Gussteil ist derart ausgestaltet, dass durch das gegossene Material mehrere konische Bereiche 40 ausgebildet werden, welche als die Trennräume 5 verwendet werden bzw. welche die Trennräume bilden. Die Trennräume 5 liegen in einer fluchtenden Reihe und sind über zwischen den Trennräumen liegende stegartige Zwischenwände 41 miteinander verbunden. Zur Versteifung der Konstruktion können stegartige, wandartige Rippen 42, 43 an den Außenmänteln der konischen Bereiche 40 und/oder an den Zwischenwänden 41 ausgebildet sein, welche sich vorzugsweise über die gesamte Länge des Moduls erstrecken. Hier sind beispielhaft drei der Rippen 42, 43 im mittleren axialen Bereich der Trennräume an deren Außenmäntel angegossen.

Es sind ferner eine Basiswand 44 und eine Oberwand 45 am Gussteil 50 ausgebildet, die zur Anlage an das Unterlaufrohr 6 und das Oberlaufrohr 13 dienen, wobei die Basiswand eine oder mehrere Ringnuten 46 aufweisen, um jeweils die Anlagebereiche zu den Rohren 6 mit einer darin eingelegten (hier nicht dargestellten) abzudichten.

Zum Zulaufrohr 17 hin ist auch direkt ein rohrartiger Ansatzbereich als Zulauf 47 an die Trennräume angegossen bzw. an diesen ausgebildet, welcher den tangentialen Zulauf in den jeweiligen Trennraum bildet. Der rohrartige Ansatzbereich 47 kann auch als Doppelrohr mit zwei konzentrischen Wandungen 47a, b ausgebildet sein, die vorzugsweise eine leicht unterschiedliche axiale Länge aufweisen und die dazu dienen, die Verbindung zum Zulaufrohr 17 zu bilden. Da das Innenrohr 47b des Doppelrohres axial etwas über das Außenrohr 47a vorsteht, wird in diesem Bereich eine besonders dichte Anlage zum Zulaufrohr 17 realisierbar.

Es werden zwei der Gussteile 50 benötigt, um in einer Anordnung nach Art der Fig. 6 die dortigen Basisblöcke 30 zu ersetzen bzw. als die Basisblöcke zu fungieren.

Es ist dabei auch denkbar, den Kopf 4 als ein entsprechendes, korrespondierendes Gussteil auszubilden (hier nicht dargestellt). Das Gussteil 50 kann als der Basisblock besonders materialsparend hergestellt werden. Zudem ist das Gussteil 50 als einstückiges Teil ebenfalls besonders leicht montierbar und demontierbar und kann auch auf einfache Weise gut gereinigt werden.

Die Gussteile 50 weisen entsprechende Funktionskonturen wie Zapfen oder Ausnehmungen auf, um im Übergangs- und Anlagebereich zum Unterlaufrohr 6, zum Oberlaufrohr 13 und zum Zuleitungsrohr 17 die Basisblöcke der Fig. 6, die aus einem massiven Vollmaterialblock gefertigt wurden, zu ersetzen. Mit den Zapfen 49 wird der Eingriff in die entsprechenden Rohr 6, 17 gewährleistet, mit der Ausnehmung 50 eine Öffnung für die Köpfe, die dazu dienen, im Trennraum 5 eine obere radiale Wand auszubilden, damit sich im Trennraum 5 in der rotierenden Suspension eine Trennzone ausbilden kann und um eine leichtere Phase aus dem Zentrum ins Oberrohr 13 abzuleiten.

Es wird wenigstens ein Trennraum 5, vorzugsweise werden aber mehrere Trennräume 5, in jeweils einem vorzugsweise gegossenen Basisblock bzw. hier einer Basiseinheit ausgebildet. Nach Fig. 7 sind zehn der Trennräume 5 je Basisblock vorgesehen, die zu zwei Gruppen zu je fünf Trennräumen zusammengefasst sind. Zwischen diesen zweimal fünf Trennräumen sind Wanddurchbrüche 48 vorgesehen, welche es erleichtern, eine Klammervorrichtung bzw. Spannvorrichtung aus Muttern und Trägern oder dgl. an einer Einheit nach Art der Fig. 6 mit Basiseinheiten(-blöcken) nach Art der Fig. 7 oder 8 anzubringen.

### Bezugszeichen

- 1: Hydrozyklonmodul
- 2: Hydrozyklone
- 3: Basisblock
- 4: Kopf
- 5: Trennraum
- 6: Unterlaufrohr
- 7: Bohrung
- 8: Bohrung
- 9: Ansatz
- 10: Bohrungsabschnitt
- 11: Ansatz
- 12: Bohrungsabschnitt
- 13: Oberlaufrohr
- 14: Ansatz
- 15: Bohrungsabschnitt
- 16: Bohrung
- 17: Zulaufrohr
- 18: Bohrung
- 19: Zulauf
- 20: Klammereinrichtung
- 21: Träger
- 22: Träger
- 23, 24: Schraubbolzen
- 25, 26: Muttern
- 27, 28: Träger
- 29: Schraubbolzen
- 30, 31: Muttern
- 32: Träger
- 33: Ablaufleitungen
- 34: Zulaufrohr
- 35: Pumpe
- 36: Ansatz
- 37: Ablaufleitung
- 39: Dichtungen
- 40: konischer Bereich
- 41: Zwischenwände
- 42, 43: Rippen
- 44: Basiswand
- 45: Oberwand
- 46: Ringnuten
- 47: Zulauf-Ansatzbereich
- 48: Wanddurchbrüche
- 50: Gussteil

## Patentansprüche

1. Hydrozyklonanordnung mit einer Vielzahl von Hydrozyklonmodulen (1), welche jeweils eine vormontierbare Einheit aus mehreren Hydrozyklonen (2) bilden, wobei
a. die Hydrozyklone (2) Trennräume aufweisen,
b. die Hydrozyklone (2) wenigstens einen Kopf (4) oder mehrere Köpfe (4) als Ableitungsvorrichtung von Schleudergut aus den Trennräumen (5) aufweisen,
c. das wenigstens eine Hydrozyklonmodul ferner eine Zuleitung (17), eine Oberleitung (13) und eine Unterleitung (3) aufweist, und
d. die vormontierte Einheit aus der Zuleitung (17), der Oberleitung (13) und/oder der Unterleitung mittels wenigstens einer Spanneinrichtung (17) unter Vorspannung zusammengehalten ist,
**dadurch gekennzeichnet, dass**
e. die Hydrozyklone (2) des wenigstens einen Hydrozyklonmoduls wenigstens einen Basisblock (3) aufweisen, in dem direkt mehrere der Trennräume ausgebildet sind,
f. wobei der Basisblock ein massiver Block ist, in welchem die Trennräume sowie ggf. Zu- und Abläufe ausgebildet sind bzw. wurden oder ein Basisblock, in dem mehrere Trennräume mittels eines Gießvorganges ausgebildet worden sind.

2. Hydrozyklonanordnung nach Anspruch 1, **dadurch gekennzeichnet, dass** seitlich der mittig angeordneten Zuleitung (17) jedes Hydrozyklonmoduls (2) jeweils einer der Hydrozyklone ausgebildet ist, so dass Doppelzyklone gebildet werden.

3. Hydrozyklonanordnung nach Anspruch 1, **dadurch gekennzeichnet, dass** der Basisblock (3) mit seinem einen Ende an dem Unterlaufrohr (6) anliegt, wobei der Basisblock (3) und das Unterlaufrohr (6) formschlüssig ineinander greifen.

4. Hydrozyklonanordnung nach einem der vorstehenden Ansprüche, **dadurch gekennzeichnet, dass** der Kopf (4) von einer Bohrung (8) durchsetzt ist, die eine konische Form aufweist und dass der Kopf (4) und der Basisblock (3) formschlüssig ineinander greifen.

5. Hydrozyklonanordnung nach einem der vorstehenden Ansprüche, **dadurch gekennzeichnet, dass** der Kopf (4) an seiner vom Basisblock (3) abgewandten Seite an dem Oberlaufrohr (13) anliegt und dass der Kopf (4) und das Oberlaufrohr (13) formschlüssig ineinander greifen.

6. Hydrozyklonanordnung nach einem der vorstehenden Ansprüche, **dadurch gekennzeichnet, dass** das Unterlaufrohr (6) und/oder das Oberlaufrohr (13) und oder das Zulaufrohr (17) einen eckigen Querschnitt aufweisen.

7. Hydrozyklonanordnung nach einem der vorstehenden Ansprüche, **dadurch gekennzeichnet, dass** der Basisblock (3) einen seitlichen Ansatz (36) aufweist, mit welchem er an dem Zulaufrohr (17) anliegt.

8. Hydrozyklonanordnung nach einem der vorstehenden Ansprüche, **dadurch gekennzeichnet, dass** das Zulaufrohr (17) Bohrungen (18) aufweist, welche in den tangentialen Zulauf (19) der Trennräume (5) münden.

9. Hydrozyklonanordnung nach einem der vorstehenden Ansprüche, **dadurch gekennzeichnet, dass** das Zulaufrohr (17) an seinen beiden gegenüberliegenden Seiten jeweils in spiegelsymmetrischer Anordnung einen der Hydrozyklone mit dem Basisblock (3) und dem Kopf (4) aufweist, wobei diese Elemente an dem Unterlaufrohr (6) und dem Oberlaufrohr (13) anliegen.

10. Hydrozyklonanordnung nach einem der vorstehenden Ansprüche, **dadurch gekennzeichnet, dass** zwischen den aneinander liegenden Elementen Basisblock (3) und/oder dem Kopf (4) und/oder dem Unterlaufrohr (6) und/oder dem Oberlaufrohr (13) und/oder dem Zulaufrohr (17) jeweils Dichtungen (19) im Bereich jeweils ggf. aneinander liegender Flächen angeordnet oder ausgebildet sind.

11. Hydrozyklonanordnung nach einem der vorstehenden Ansprüche, **dadurch gekennzeichnet, dass** in axialer Richtung des Zulaufrohres (17) bzw. des Unterlaufrohrs (6) und des Oberlaufrohres (13) jeweils mehrere Doppel-Hydrozyklone angeordnet und/oder ausgebildet sind.

12. Hydrozyklonanordnung nach einem der vorstehenden Ansprüche, **dadurch gekennzeichnet, dass** eine erste Spanneinrichtung (20) Träger (21, 22) aufweist, die jeweils an den von den Hydrozyklonen abgewandten Außenwandungen der beiden Oberlaufrohre und der beiden Unterlaufrohre (6) unter Vorspannung anliegen und dass die Vorspannkraft mittels Gewindebolzen und darauf aufgeschraubten Muttern erzeugt wird.

13. Hydrozyklonanordnung nach einem der vorstehenden Ansprüche, **dadurch gekennzeichnet, dass** eine zweite Spanneinrichtung (20) Träger aufweist, die jeweils an den Basisblöcken (3) jedes Doppel-Hydrozyklons anliegen unter einer Vorspannung anliegen, welche mittels Gewindebolzen und darauf aufgeschraubten Muttern erzeugt wird.

14. Hydrozyklonanordnung nach einem der vorstehenden Ansprüche, **dadurch gekennzeichnet, dass** der Basisblock als Gussteil (50) ausgebildet ist, wobei das Gussteil (50) derart ausgestaltet ist, dass durch das gegossene Material mehrere konische Bereiche (40) ausgebildet werden, welche die Trennräume (5) bilden, wobei die Trennräume (5) über zwischen den konischen Bereichen (40) liegende stegartige Zwischenwände (41) miteinander verbunden sind.

15. Hydrozyklonanordnung nach einem der vorstehenden Ansprüche, **dadurch gekennzeichnet, dass** stegartige, wandartige Rippen (42, 43) konischen Bereich und/oder an den Zwischenwänden (41) ausgebildet sind.

16. Hydrozyklonanordnung nach einem der vorstehenden Ansprüche, **dadurch gekennzeichnet, dass** eine Unterwand und eine Oberwand (44, 45) zur Anlage an dem Oberlaufrohr und dem Unterlaufrohr an dem Gussteil (50) ausgebildet sind.

17. Hydrozyklonanordnung nach einem der vorstehenden Ansprüche, **dadurch gekennzeichnet, dass** an den konischen Bereichen ferner Ansätze (47) mit jeweils einem der Zuläufe in jeweils einen der Trennräume ausgebildet sind.

## Claims

1. A hydrocyclone arrangement having a plurality of hydrocyclone modules (1) which in each case form a pre-assemblable unit produced from several hydrocyclones (2), wherein
a. the hydrocyclones (2) have separating spaces (5)
b. the hydrocyclones (2) have at least one head (4) or several heads (4) as an apparatus for removing centrifuged material out of the separating spaces (5),
c. the at least one hydrocyclone module additionally has a supply line (17), an upper line (13) and a lower line (3) and
d. the pre-assembled unit composed of the supply line (17), the upper line (13) and/or the lower line is held together with pretensioning by means of at least one clamping device (17),
**characterized in that**
e. the hydrocyclones (2) of the at least one hydrocyclone module have at least one base block (3), in which several of the separating spaces are realized directly,
f. wherein the base block (3) is a solid block, in which the separating spaces as well as, where applicable, inlets and outlets have been realized or a base block, in which several separating spaces have been realized by means of a casting operation.

2. The hydrocyclone arrangement as claimed in claim 1, **characterized in that** to the side of the centrally arranged supply line (17) of each hydrocyclone module (2) in each case one of the hydrocyclone modules is realized such that double cyclones are formed.

3. The hydrocyclone arrangement as claimed in claim 1, **characterized in that** the base block (3) bears against the underflow pipe (6) by way of its one end, wherein the base block (3) and the underflow pipe (6) interlock in a form-fitting manner.

4. The hydrocyclone arrangement as claimed in one of the preceding claims, **characterized in that** the head (4) is penetrated by a bore (8) which is conical in form and **in that** the head (4) and the base block (3) interlock in a form-fitting manner.

5. The hydrocyclone arrangement as claimed in one of the preceding claims, **characterized in that** the head (4) bears against the overflow pipe (13) on its side remote from the base block (3) and **in that** the head (4) and the overflow pipe (13) interlock in a form-fitting manner.

6. The hydrocyclone arrangement as claimed in one of the preceding claims, **characterized in that** the underflow pipe (6) and/or the overflow pipe (13) and or the supply pipe (17) are angular in cross section.

7. The hydrocyclone arrangement as claimed in one of the preceding claims, **characterized in that** the base block (3) has a lateral shoulder (36) by way of which it bears against the supply pipe (17).

8. The hydrocyclone arrangement as claimed in one of the preceding claims, **characterized in that** the supply pipe (17) has bores (18) which open out into the tangential inlet (19) of the separating spaces (5).

9. The hydrocyclone arrangement as claimed in one of the preceding claims, **characterized in that** the supply pipe (17), on its two opposite sides in each case in a mirror-symmetrical arrangement, has one of the hydrocyclones with the base block (3) and the head (4), wherein said elements bear against the underflow pipe (6) and the overflow pipe (13).

10. The hydrocyclone arrangement as claimed in one of the preceding claims, **characterized in that** between the abutting elements of base block (3) and/or the head (4) and/or the underflow pipe (6) and/or the overflow pipe (13) and/or the supply pipe (17), in each case seals (19) are arranged or are realized in the region of in each case, where applicable, abutting faces.

11. The hydrocyclone arrangement as claimed in one of the preceding claims, **characterized in that** several double hydrocyclones are arranged and/or are realized in each case in the axial direction of the supply pipe (17) or of the underflow pipe (6) and of the overflow pipe (13).

12. The hydrocyclone arrangement as claimed in one of the preceding claims, **characterized in that** a first clamping device (20) has supports (21, 22) which, in each case, bear with pretensioning against the outside walls of the two overflow pipes and of the two underflow pipes (6) remote from the hydrocyclones and **in that** the pretensioning force is generated by means of threaded bolts and nuts screw-connected thereon.

13. The hydrocyclone arrangement as claimed in one of the preceding claims, **characterized in that** a second clamping device (20) has supports which, in each case, bear against the base blocks (3) of each double hydrocyclone, and bear with a pretensioning which is generated by means of threaded bolts and nuts screw-connected thereon.

14. The hydrocyclone arrangement as claimed in one of the preceding claims, **characterized in that** the base block is realized as a cast part (50), wherein the cast part (50) is realized in such a manner that the cast material realizes several conical regions (40) which form the separating spaces (5), wherein the separating spaces (5) are interconnected by means of web-like intermediate walls (41) which are located between the conical regions (40)..

15. The hydrocyclone arrangement as claimed in one of the preceding claims, **characterized in that** web-like, wall-like ribs (42, 43) are realized in the conical region and/or on the intermediate walls (41).

16. The hydrocyclone arrangement as claimed in one of the preceding claims, **characterized in that** a lower wall and an upper wall (44, 45) are realized on the cast part (50) to bear against the overflow pipe and the underflow pipe.

17. The hydrocyclone arrangement as claimed in one of the preceding claims, **characterized in that** shoulders (47) with in each case one of the inlets into in each case one of the separating spaces are additionally realized on the conical regions.

## Revendications

1. Disposition d'hydrocyclones comprenant plusieurs modules d'hydrocyclones (1) qui forment chacune une unité pouvant être préassemblée formée de plusieurs hydrocyclones (2), dans laquelle
a. les hydrocyclones (2) présentent des espaces de séparation,
b. les hydrocyclones (2) présentent au moins une tête (4) ou plusieurs têtes (4) servant de dispositif d'évacuation de la matière éjectée hors des espaces de séparation (5),
c. l'au moins un module d'hydrocyclones présente en outre une conduite d'arrivée (17), une conduite supérieure (13) et une conduite inférieure (3) et
d. l'unité préassemblée formée de la conduite d'arrivée (17), de la conduite supérieure (13) et/ou de la conduite inférieure est retenue assemblée sous précontrainte au moyen d'au moins un dispositif de serrage (17),
**caractérisée en ce que**
e. les hydrocyclones (2) de l'au moins un module d'hydrocyclones présentent au moins un bloc de base (3) dans lequel sont directement formés plusieurs des espaces de séparation,
f. le bloc de base étant un bloc plein dans lequel les espaces de séparation et éventuellement des arrivées et des évacuations sont ou ont été formés ou un bloc de base dans lequel plusieurs espaces de séparation ont été formés au moyen d'une opération de coulée.

2. Disposition d'hydrocyclones selon la revendication 1, **caractérisée en ce qu'**un des hydrocyclones est formé sur le côté de la conduite d'arrivée (17), disposée au milieu, de chaque module d'hydrocyclone (2), de façon à former des doubles cyclones.

3. Disposition d'hydrocyclones selon la revendication 1, **caractérisée en ce que** le bloc de base (3) repose par une extrémité sur le tuyau d'écoulement inférieur (6), le bloc de base (3) et le tuyau d'écoulement inférieur (6) se mettant en prise l'un dans l'autre en correspondance de forme.

4. Disposition d'hydrocyclones selon l'une des revendications précédentes, **caractérisée en ce que** la tête (4) est traversée par un alésage (8) de forme conique et **en ce que** la tête (4) et le bloc de base (3) se mettent en prise l'un dans l'autre en correspondance de forme.

5. Disposition d'hydrocyclones selon l'une des revendications précédentes, **caractérisée en ce que** la tête (4) repose, sur son côté tourné à l'opposé du bloc de base (3), sur le tuyau d'écoulement supérieur (13) et **en ce que** la tête (4) et le tuyau d'écoulement supérieur (13) se mettent en prise l'un dans l'autre en correspondance de forme.

6. Disposition d'hydrocyclones selon l'une des revendications précédentes, **caractérisée en ce que** le tuyau d'écoulement inférieur (6) et/ou le tuyau d'écoulement supérieur (13) et/ou le tuyau d'arrivée (17) présentent une section anguleuse.

7. Disposition d'hydrocyclones selon l'une des revendications précédentes, **caractérisée en ce que** le bloc de base (3) présente un épaulement latéral (36) par lequel il repose sur le tuyau d'arrivée (17).

8. Disposition d'hydrocyclones selon l'une des revendications précédentes, **caractérisée en ce que** le tuyau d'arrivée (17) présente des alésages (18) qui débouchent dans l'arrivée tangentielle (19) des espaces de séparation (5).

9. Disposition d'hydrocyclones selon l'une des revendications précédentes, **caractérisée en ce que** le tuyau d'arrivée (17) présente sur chacun de ses deux côtés opposés, dans une disposition symétrique en miroir, un des hydrocyclones avec le bloc de base (3) et la tête (4), ces éléments reposant sur le tuyau d'écoulement inférieur (6) et le tuyau d'écoulement supérieur (13).

10. Disposition d'hydrocyclones selon l'une des revendications précédentes, **caractérisée en ce que** des joints d'étanchéité (19) sont disposés ou formés entre les éléments contigus comprenant le bloc de base (3) et/ou la tête (4) et/ou le tuyau d'écoulement inférieur (6) et/ou le tuyau d'écoulement supérieur (13) et/ou le tuyau d'arrivée (17), au niveau de surfaces contiguës.

11. Disposition d'hydrocyclones selon l'une des revendications précédentes, **caractérisée en ce que** plusieurs doubles hydrocyclones sont disposés et/ou formés dans le sens axial du tuyau d'arrivée (17) ou du tuyau d'écoulement inférieur (6) et du tuyau d'écoulement supérieur (13).

12. Disposition d'hydrocyclones selon l'une des revendications précédentes, **caractérisée en ce qu'**un premier dispositif de serrage (20) présente des supports (21, 22) qui reposent chacun sous précontrainte sur les parois extérieures tournées à l'opposé des hydrocyclones des deux tuyaux d'écoulement supérieurs et des deux tuyaux d'écoulement inférieurs (6) et **en ce que** la force de précontrainte est produite au moyen de boulons filetés et d'écrous vissés sur ceux-ci.

13. Disposition d'hydrocyclones selon l'une des revendications précédentes, **caractérisée en ce qu'**un deuxième dispositif de serrage (20) présente des supports qui reposent chacun sur les blocs de base (3) de chaque double hydrocyclone sous une précontrainte produite au moyen de boulons filetés et d'écrous vissés sur ceux-ci.

14. Disposition d'hydrocyclones selon l'une des revendications précédentes, **caractérisée en ce que** le bloc de base est conformé comme une pièce moulée (50), laquelle pièce moulée (50) est conçue de telle manière que le matériau coulé forme plusieurs zones coniques (40) qui forment les espaces de séparation (5), lesquels espaces de séparation (5) sont reliés les uns aux autres par des cloisons (41) en forme de barrettes situées entre les zones coniques (40).

15. Disposition d'hydrocyclones selon l'une des revendications précédentes, **caractérisée en ce que** des nervures (42, 43) en forme de barrettes formant des parois sont formées dans la zone conique et/ou sur les cloisons (41).

16. Disposition d'hydrocyclones selon l'une des revendications précédentes, **caractérisée en ce qu'**une paroi inférieure et une paroi supérieure (44, 45) destinées à l'appui sur le tuyau d'écoulement supérieur et sur le tuyau d'écoulement inférieur sont formées sur la pièce moulée (50).

17. Disposition d'hydrocyclones selon l'une des revendications précédentes, **caractérisée en ce que** sont en outre formés sur les zones coniques des raccords (47) comportant chacun une des arrivées dans l'un des espaces de séparation.
